# FASCICULE DE BREVET EUROPEEN

(11) **EP 3 347 603 B1**
(45) Date de publication et mention de la délivrance du brevet: **26.06.2019**
(21) Numéro de dépôt: 16756736.1
(22) Date de dépôt: 02.08.2016
(51) Int. Cl.: F16B 5/06, B60R 19/24

(54) **DISPOSITIF DE FIXATION D'UN PARE-CHOCS AVEC UN ELEMENT DE CARROSSERIE**
VORRICHTUNG ZUR BEFESTIGUNG EINER STOSSSTANGE AUF EINEM KARROSSERIEELEMENT
DEVIE FOR FIXING A BUMPER TO A BODY ELEMENT

(30) Priorité: 11.09.2015 FR 1558473
(43) Date de publication de la demande: 18.07.2018
(73) Titulaire: PSA AUTOMOBILES S.A., 78300 Poissy (FR)
(72) Inventeur: REMY, Stéphane, 70400 Belverne (FR)
(74) Mandataire: Fernandez, Francis Lionel
(86) Numéro de dépôt international: PCT/FR2016/052013
(87) Numéro de publication internationale: WO 2017/042445

(56) Documents cités:
- EP-A1- 2 518 336
- EP-A1- 2 730 487
- WO-A1-2006/007935
- DE-A1-102007 032 929

## Description

La présente invention se rapporte à un dispositif de fixation d'un pare-chocs avant ou arrière sur la carrosserie d'un véhicule automobile avec au moins un élément de la carrosserie. Un tel dispositif permet de garantir la qualité des jeux et affleurement entre le pare-chocs et un élément de carrosserie, notamment une aile.

Dans la zone de fixation d'un pare-chocs à l'avant ou à l'arrière d'un véhicule, il arrive fréquemment que des moyens de fixation classiques ne puissent être utilisés car une telle zone de fixation ne permet pas de loger des moyens de fixation classiques et d'accéder aisément à ces moyens.

Ceci est dû principalement à la présence d'éléments de la carrosserie du véhicule ou du véhicule lui-même qui gênent l'accès à des moyens de fixation classiques et leur montage.

De plus, il existe une ligne ou surface de contact, souvent appelée ligne d'accostage, formée entre une extrémité du pare-chocs et un élément de la carrosserie adjacent au pare-chocs, cet élément étant fréquemment une aile du véhicule automobile. Il arrive que cette ligne d'accostage présente une longueur réduite, ce qui ne concourt pas à la réalisation d'une fixation solide du pare-chocs avec l'élément adjacent de la carrosserie, étant donné que la surface de contact est limitée.

Il est connu plusieurs modes de réalisation d'un pare-chocs avec un élément adjacent de carrosserie d'un véhicule automobile. Par exemple, en prenant comme élément adjacent de carrosserie une aile, dans un premier mode de l'état de la technique, le pare-chocs est pris en sandwich entre un presseur et l'aile pour garantir sa tenue sur le véhicule et un plaquage du pare-chocs contre l'aile.

Un tel presseur, avantageusement de forme longiforme pour recouvrir une grande partie de la ligne d'accostage comprend des moyens d'encliquetage sur l'élément de carrosserie qu'est l'aile, des pions de pilotage pour le positionnement du pare-chocs par rapport à l'élément et des vis pour la fixation du pare-chocs sur le presseur.

Ce plaquage permet de garantir une qualité perçue optimale avec un jeu nul entre le pare-chocs et l'aile et une tenue de qualité dans la durée d'utilisation.

Le système de presseur nécessite cependant un certain volume d'espace pour pouvoir loger le nombre de moyens d'encliquetage nécessaires à une bonne tenue ainsi que les pions de pilotage et les vis traversant le presseur par un évidement respectif. L'accès pour le vissage des vis nécessite également de dégager un volume autour des têtes de vis et un passage pour la visseuse. Ce premier mode de réalisation ne peut donc s'appliquer dans les zones à faible espace libre disponible.

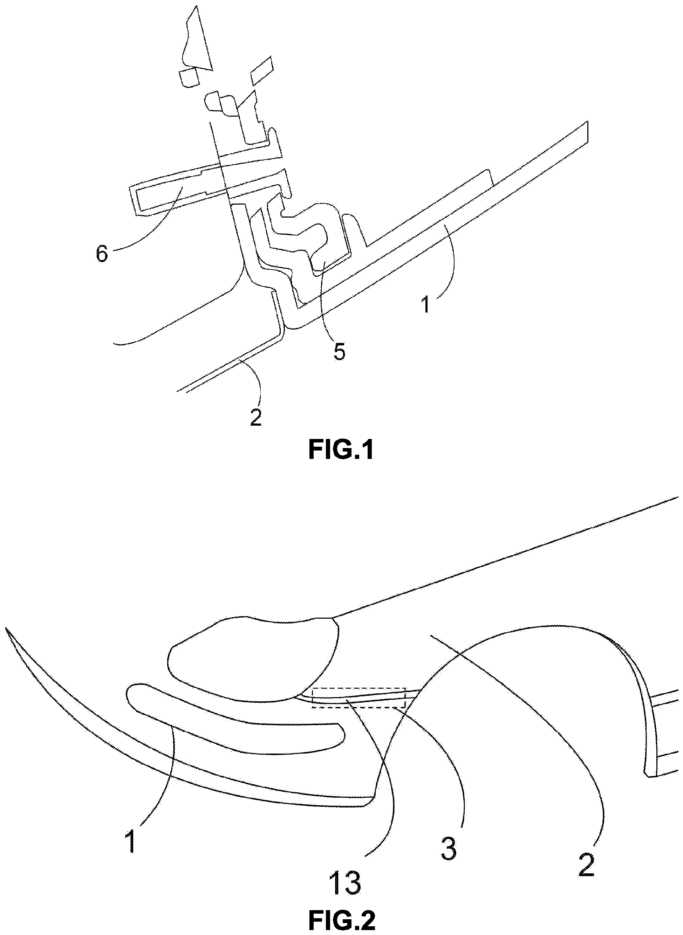

Un deuxième mode de réalisation d'une fixation sans vissage est plus approprié à une zone d'accès restreinte au pare-chocs et à l'élément adjacent de la carrosserie. Ce deuxième mode est illustré à la figure 1.

Ce deuxième mode permet de loger dans une zone à faible espace libre un système de fixation sans vissage. Le système utilise un presseur coulissant 5 qui vient plaquer le pare-chocs 1 contre l'élément 2 de la carrosserie, illustré à cette figure par une aile, en contre-réaction sur une tête 6 d'un rivet, faisant saillie du presseur coulissant 5 en direction de l'aile 2. La tête de rivet 6 est supportée par le presseur coulissant 5 qui est appliqué contre un renfort d'aile avec une portion du pare-chocs intercalée entre le renfort d'aile et le presseur coulissant 5.

Le renfort d'aile présente une partie de support appliquée contre l'aile 2 et une autre partie sensiblement recourbée à 90° par rapport au reste du renfort d'aile et donc de l'aile 2. La partie sensiblement recourbée à 90° est traversée par la tête de rivet 6 portée par le presseur coulissant 5, la tête de rivet 6 traversant également la portion du pare-chocs 1 intercalée entre le renfort d'aile et le presseur coulissant 5.

Des moyens d'encliquetage sont portés par la portion du pare-chocs 1 intercalée entre le renfort d'aile et le presseur coulissant 5 pour fixer le pare-chocs 1 avec la portion recourbée du renfort d'aile et donc pour la solidarisation du pare-chocs 1 avec l'aile 2.

Ce deuxième mode de réalisation permet un montage sans vissage, mais il est limité dans les efforts transmissibles via la tête de rivet 6 pour respecter les efforts de montage manuel admissible par un opérateur et également pour éviter la déformation de la tête de rivet 6 sous un effort trop important.

Dans la durée, ce deuxième mode de réalisation perd également de son efficacité par le fluage du plastique autour de la tête de rivet 6 et par les contraintes de fatigue subies par la tête du rivet 6.

Le document WO-A-2006/07935 décrit un dispositif de fixation et un procédé de montage pour des pièces de carrosserie d'un véhicule automobile à relier, à savoir une aile et un revêtement de pare-chocs. L'objectif du procédé décrit dans ce document est de relier les deux pièces de revêtement susnommées par une pince de retenue, pouvant aussi être sous la forme d'une agrafe. La pince de retenue peut être prémontée sur une des pièces de revêtement, ici le revêtement de pare-chocs avant que les bords périphériques des deux pièces ne soient superposés.

La pince de retenue prémontée fait saillie de manière inclinée à partir des bords périphériques du revêtement de pare-chocs correspondant et est bloquée, lors de la superposition des bords périphériques des deux pièces, par l'intermédiaire de moyens de fixation amovible de manière à ne pas pouvoir pivoter.

Dans ce document, les deux pièces de revêtement sont insérées à l'intérieur de la pince et la fixation des deux pièces entre elles dure tant que la pince exerce une action de pression contre les deux pièces. Ce dispositif présente un premier inconvénient lors de la solidarisation des deux éléments dû à la résistance de la pince lors de l'écartement de ses branches pour l'insertion des deux éléments en son intérieur. De plus, le dispositif présente aussi l'inconvénient qu'en utilisation la pince vieillisse en n'exerçant plus une action de pinçage suffisante sur les deux pièces.

Par conséquent, le problème à la base de l'invention est de concevoir un procédé et un dispositif de fixation d'un pare-chocs avant ou arrière sur au moins un élément de la carrosserie d'un véhicule automobile qui soit simple de mise en oeuvre à un endroit de la carrosserie à faible espace libre disponible pour le montage, tout en étant résistant une fois mis en place.

Pour atteindre cet objectif, il est prévu selon l'invention un dispositif de fixation l'une avec l'autre de deux pièces étant un pare-chocs et un élément de la carrosserie d'un véhicule automobile, le dispositif étant destiné à loger et retenir en son intérieur une partie d'au moins une première des pièces, caractérisé en ce qu'il comprend une portion fixe et une portion amovible superposées dans une position de fixation du dispositif avec un espacement entre les deux portions, l'espacement entre les deux portions comportant une zone de logement et de retenue des parties des première et seconde pièces superposées l'une à l'autre, un passage porté par chacune des portions fixe et amovible étant déporté sur le dispositif par rapport à la zone de logement, ce passage recevant un moyen de fixation des portions entre elles.

L'effet technique est d'obtenir un plaquage par au moins un moyen de fixation, avantageusement par vissage, du pare-chocs sur un élément de carrosserie même dans un encombrement réduit. Du fait de la déportation du passage et donc du moyen de fixation par rapport à la superposition des parties des pièces formées par le pare-chocs et l'élément de carrosserie, cette superposition des parties ne fait plus obstacle au montage et à l'accès au moyen de fixation.

Avantageusement, la portion fixe présente une première extrémité portant un évidement pour la réception d'un bec porté par une première extrémité de la portion amovible et les portions fixe et amovible présentent des secondes extrémités en vis-à-vis en position de fixation du dispositif, les secondes extrémités étant opposées aux premières extrémités sur leur portion respective, les secondes extrémités portant chacune le passage pour le moyen de fixation.

Ce mode préférentiel est très avantageux, étant donné qu'à une extrémité des portions fixe et amovible se trouve un moyen de fixation rapide et aussi de centrage par un bec entrant dans un évidement et qu'à l'autre extrémité se trouve le moyen de fixation, avantageusement par vissage, traversant les deux portions par le passage.

La fixation des deux portions est donc assurée aux deux extrémités des portions fixe et amovible, ce qui assure une fixation bien répartie sur la longueur des portions fixe et amovible. Lors de la mise en place du moyen de fixation, le bec retenu dans l'évidement assure un contre-appui facilitant cette mise en place, avantageusement par serrage.

Avantageusement, le bec comprend un tronçon d'extrémité distale par rapport à la portion amovible le portant et un tronçon intercalaire entre le tronçon d'extrémité et la portion amovible, le tronçon intercalaire délimitant une largeur de l'espacement entre les portions fixe et amovible.

Avantageusement, le tronçon d'extrémité distale est formé par un recourbement de l'extrémité distale de 10 à 90°.

Avantageusement, l'évidement présente des dimensions permettant un jeu pour l'introduction du tronçon d'extrémité distale en son intérieur.

Avantageusement, la portion fixe est intégrée dans la seconde des pièces.

Avantageusement, le moyen de fixation traversant par le passage les portions fixe et amovible est du type vis et écrou.

L'invention concerne aussi un ensemble d'un pare-chocs et d'au moins un élément de la carrosserie d'un véhicule automobile lui étant adjacent, caractérisé en ce qu'il comporte un tel dispositif de fixation du pare-chocs sur ledit au moins un élément, le pare-chocs comportant une peau de pare-chocs formant la partie de la première pièce logée et retenue dans le dispositif et un organe de renfort dudit au moins un élément de la carrosserie formant la partie de la seconde pièce logée et retenue dans le dispositif avec la portion fixe intégrée dans ou disposée au dos, opposé à la peau de pare-chocs, de l'organe de renfort dudit au moins un élément de la carrosserie, les parties ainsi superposées de la peau de pare-chocs et de l'organe de renfort formant entre elles une surface d'accostage, le passage respectif des portions fixe et amovible étant localisé à l'extérieur de la surface d'accostage.

Avantageusement, l'ensemble comporte deux éléments de carrosserie sous forme d'une aile encadrant le pare-chocs, l'ensemble comportant un dispositif de fixation du pare-chocs à chacune des ailes.

L'invention concerne aussi un procédé de fixation d'un pare-chocs sur au moins un élément de la carrosserie dans un tel ensemble, lequel comporte les étapes suivantes :
- quand la portion fixe n'est pas intégrée audit au moins un élément, positionnement de la portion fixe sur la face dudit au moins un élément opposée à celle portant la partie dudit au moins un élément destinée à être superposée par une partie du pare-chocs, la portion amovible étant retirée du dispositif,
- superposition d'une partie du pare-chocs sur la partie dudit au moins un élément de la carrosserie avec la portion fixe intégrée dans la partie ou disposée sur la face opposée à la peau de pare-chocs de la partie,
- présentation du bec de la portion amovible pour son introduction dans l'évidement porté par la portion fixe,
- quand le bec est retenu dans l'évidement, fixation des portions entre elles par introduction d'un moyen de fixation dans les passages des première et seconde portions.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe d'un dispositif de fixation d'un pare-chocs sur un élément de carrosserie de véhicule automobile selon l'état de la technique,
- la figure 2 est une représentation schématique d'une partie avant d'un véhicule automobile avec un pare-chocs et une aile pouvant être solidarisés ensemble avec un dispositif de fixation selon la présente invention,
- la figure 3 est une représentation schématique d'une coupe d'un dispositif de fixation d'un pare-chocs sur un élément de carrosserie de véhicule automobile selon la présente invention, le dispositif de fixation étant montré à cette figure en position de fixation maintenant une partie de pare-chocs contre une partie d'un élément de carrosserie,
- la figure 4 est une représentation schématique d'une coupe d'un dispositif de fixation d'un pare-chocs sur un élément de carrosserie de véhicule automobile selon la présente invention, le dispositif de fixation étant montré à cette figure en position ouverte pour l'introduction d'une partie de pare-chocs et d'une partie d'un élément de carrosserie en son intérieur.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité. Par exemple à la figure 2, la ligne d'accostage 13 est montrée exagérément large pour être bien visible, un affleurement aussi important n'existant pas en pratique entre l'aile 2 et le pare-chocs 1. De plus, le dispositif 3 n'est représenté seulement que symboliquement par un rectangle en pointillés.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

La figure 1 a déjà été décrite dans la partie introductive de la description de la présente demande comme illustrant un état de la technique.

En se référant aux figures 2 à 4, la présente invention concerne un dispositif 3 de fixation l'une avec l'autre de deux pièces 1, 2 entre un pare-chocs 1 et un élément 2 de la carrosserie d'un véhicule automobile, la référence 3 étant visible à la figure 2. Le pare-chocs 1 peut être un pare-chocs avant ou arrière de véhicule automobile. L'élément 2 de la carrosserie peut être une aile avant ou arrière du véhicule automobile.

La figure 2 montre une partie avant gauche d'un véhicule automobile avec une aile 2 et un pare-chocs 1 pouvant être solidarisés avec un dispositif 3 de fixation selon la présente invention sans toutefois montrer les caractéristiques du dispositif 3 de fixation. A cette figure, il est visible une ligne ou surface d'accostage 13 entre le pare-chocs 1 et l'aile 2.

En se référant aux figures 2 à 4, le dispositif 3 de fixation est destiné à loger et retenir en son intérieur une partie 1a d'au moins une première 1 des pièces 1, 2. En effet, il existe un mode de réalisation de l'invention dans lequel le dispositif 3 est indépendant du pare-chocs 1 ou de l'élément 2 de la carrosserie ainsi qu'un mode pour lequel une portion du dispositif 3 de fixation est intégrée soit à l'élément 2 de la carrosserie ou soit au pare-chocs 1, avantageusement à l'élément 2 dans une partie de renfort 2a de cet élément 2.

Le dispositif 3 de fixation comprend une portion fixe 4 et une portion amovible 8 superposées en position de fixation du dispositif. Les deux portions 4, 8 laissent entre elles un espacement 9 comportant une zone de logement et de retenue des parties 1a, 2a des première et seconde pièces 1, 2 superposées l'une à l'autre.

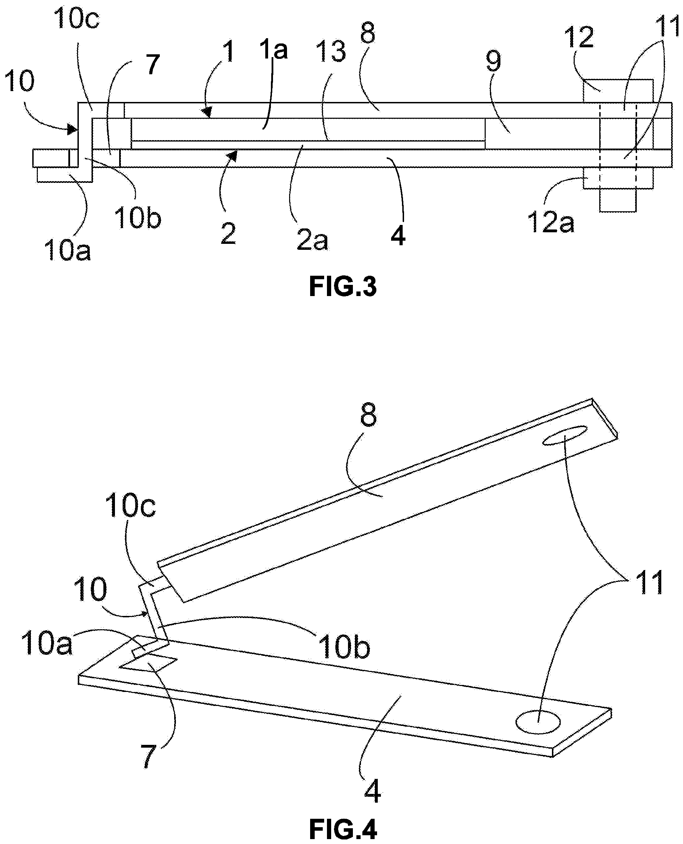

Aux figures 3 et 4, il est montré une partie 1a du pare-chocs 1, avantageusement une peau de pare-chocs, et une partie 2a de l'aile 2, avantageusement un renfort d'aile, ces deux parties 1a, 2a étant intercalées entre les deux portions 4, 8.

Ceci n'est pas limitatif car il existe un mode de réalisation pour lequel la portion fixe 4 est intégrée dans la seconde 2 des pièces 1, 2, cette pièce pouvant être le pare-chocs 1 ou l'aile 2.

Un passage 11 porté par une extrémité des portions fixe 4 et amovible 8 est déporté sur le dispositif 3 par rapport à la zone de logement, ce passage 11 recevant un moyen de fixation 12, 12a des portions 4, 8 entre elles.

Ainsi, le moyen de fixation 12, 12a est facilement accessible, son accès n'étant pas gêné par la présence des parties 1a, 2a des première et seconde pièces 1, 2. Un tel dispositif 3 de fixation peut être avantageusement facilement amovible tout en restant ferme en position de fixation.

La portion fixe 4 peut présenter une première extrémité portant un évidement 7 pour la réception d'un bec 10 porté par une première extrémité de la portion amovible 8. Les portions fixe 4 et amovible 8 peuvent présenter des secondes extrémités en vis-à-vis en position de fixation du dispositif 3. Ces secondes extrémités sont opposées aux premières extrémités sur leur portion 4, 8 respective en portant chacune le passage 11 pour le moyen de fixation 12, 12a. Dans le cas d'une intégration de la portion fixe 4 dans un élément 2 de carrosserie ou le pare-chocs 1, l'évidement 11 est pratiqué dans cet élément 2 ou le pare-chocs 1. Il en va de même pour le passage 11 de la portion fixe 4.

L'introduction du bec 10 dans le passage assure un contre-appui au serrage effectué par un moyen de fixation 12, 12a à une extrémité opposée de la portion fixe 4. Après serrage, le pare-chocs 1 et l'élément 2 de carrosserie, avantageusement un renfort 2a d'aile 2 sont pris en sandwich entre la portion fixe 4 et la portion amovible 8 du dispositif 3 de fixation formant une pince. Avantageusement, la fixation et le contre-appui peuvent se faire à l'extérieur de la zone de logement des parties 1a, 2a des première et seconde pièces 1, 2.

Les parties 1a, 2a des première et seconde pièces 1, 2 sont superposées et pressées l'une contre l'autre en position de fixation du dispositif 3. Ces parties 1a, 2a forment une surface d'accostage 13 et plus cette surface d'accostage 13 est grande, meilleure est la solidarisation des parties 1a, 2a donc du pare-chocs 1 avec l'élément 2 de la carrosserie qui lui est adjacent.

Le bec 10 peut comprendre un tronçon d'extrémité 10a distale par rapport à la portion amovible 8 le portant et un tronçon intercalaire 10b entre le tronçon d'extrémité 10a et la portion amovible 8. Le tronçon intercalaire 10b peut s'étendre perpendiculairement aux portions fixe 4 et amovible 8 et délimiter une largeur de l'espacement 9 entre les portions fixe 4 et amovible 8, cette largeur étant prédéterminée pour recevoir les parties 1a, 2a du pare-chocs 1 et de l'élément 2.

Le tronçon d'extrémité 10a distale peut être formé par un recourbement de l'extrémité distale de 10 à 90°, préférentiellement de 45° à 90°. Aux figures 3 et 4, le tronçon d'extrémité 10a distale est recourbé à 90° par rapport au tronçon intercalaire 10b. Ainsi, le tronçon d'extrémité 10a distale peut être en butée contre la face inférieure de la portion fixe 4 opposée à celle en vis-à-vis en position de fixation de la portion amovible 8. Le tronçon intercalaire 10b du bec 10 peut être indirectement relié à la portion amovible 8 par un tronçon de raccordement 10c s'étendant dans le prolongement de la portion amovible 8.

L'évidement 7 peut présenter des dimensions permettant un jeu pour l'introduction du tronçon d'extrémité 10a distale en son intérieur. Ce jeu peut être suffisamment grand pour permettre une introduction facile du tronçon d'extrémité 10a dans l'évidement 7 mais suffisamment petit pour empêcher une sortie intempestive du tronçon d'extrémité 10a hors de l'évidement 7. L'évidement 7 peut être de forme sensiblement carrée ou rectangulaire quand le tronçon d'extrémité 10a présente une forme rectangulaire, cylindrique ou parallélépipédique. Le tronçon d'extrémité 10a peut être sous la forme d'une languette plane ou sous forme d'une barre parallélépipédique ou cylindrique.

Dans une forme de réalisation préférentielle, les moyens de fixation 12, 12a positionnés avantageusement aux secondes extrémités des portions 4, 8 et les traversant par le passage 11 peuvent être du type vis 12 et écrou 12a. Dans ce cas, une tête de vis 12 et l'écrou 12a reposent respectivement sur une face de la portion amovible 8 ou de la portion fixe 4 qui est opposée à celles en vis-à-vis délimitant l'espacement 9.

L'invention concerne un ensemble d'un pare-chocs 1 et d'au moins un élément 2 de la carrosserie d'un véhicule automobile lui étant adjacent. Cet ensemble comporte un dispositif 3 de fixation du pare-chocs 1 sur ledit au moins un élément 2 tel que décrit précédemment. Il peut y avoir ainsi deux éléments 2 de carrosserie encadrant le pare-chocs 1 avec un dispositif 3 de fixation pour chaque élément 2.

De manière préférentielle, l'ensemble comporte deux éléments de carrosserie sous forme d'une aile 2 encadrant le pare-chocs 1, l'ensemble comportant un dispositif 3 de fixation du pare-chocs 1 à chacune des ailes 2.

Le pare-chocs 1 peut comporter une peau 1a de pare-chocs formant la partie de la première pièce 1 logée et retenue dans le dispositif 3. Dans un mode de réalisation de l'invention, un organe de renfort 2a dudit au moins un élément 2 de la carrosserie forme une partie de la seconde pièce logée et retenue dans le dispositif 3. Dans un autre mode de réalisation, la portion fixe 4 est intégrée dans l'organe de renfort 2a dudit au moins un élément 2 de la carrosserie.

Les parties 1a, 2a ainsi superposées de la peau 1a de pare-chocs et de l'organe de renfort 2a forment entre elles une surface d'accostage 13, le passage 11 respectif des portions 4, 8 fixe et amovible et avantageusement l'évidement 7 de la portion fixe 4 étant localisés à l'extérieur de la surface d'accostage 13 pour offrir une meilleure accessibilité.

Les portions fixe 4 et amovible 8 peuvent présenter les mêmes formes que la partie 1a, 2a de l'élément 2 de carrosserie ou du pare-chocs 1 qui leur est directement adjacent ou qui intègre la portion fixe 4. Par exemple, le pare-chocs 1 peut être plaqué contre une aile 2 par le dispositif 3 de fixation formant pince avec ses portions fixe 4 et amovible 8. Sans que cela soit limitatif, la portion fixe 4 peut être positionnée derrière l'aile 2 et la portion amovible 8 peut être positionné à l'intérieur du pare-chocs 1. La portion fixe 4 peut être intégrée dans ou disposée au dos, dos qui est opposé à la peau 1a de pare-chocs 1, de l'organe de renfort 2a dudit au moins un élément 2 de la carrosserie.

L'invention concerne aussi un procédé de fixation d'un pare-chocs 1 sur au moins un élément 2 de la carrosserie dans un ensemble tel que décrit précédemment. Le procédé comporte les étapes suivantes.

Quand la portion fixe 4 n'est pas intégrée audit au moins un élément 2, positionnement de la portion fixe 4 sur la face de l'élément 2 opposée à celle destinée à être superposée par une partie 1a du pare-chocs 1, la portion amovible 8 étant retirée du dispositif 3. Quand la portion fixe 4 est intégrée audit au moins un élément 2, ceci est directement effectuée et il ne suffit que de retirer la portion amovible 8 du dispositif 3.

Il est alors procédé à la superposition d'une partie 1a du pare-chocs 1 sur la partie 2 dudit au moins un élément 2 de la carrosserie avec la portion fixe 4 intégrée dans la partie 2a ou disposée sur la face opposée à la peau 1a de pare-chocs de la partie 2a.

Il est ensuite procédé à la présentation du bec 10 de la portion amovible 8 pour son introduction dans l'évidement 7 porté par la portion fixe 4. Quand le bec 10 est retenu dans l'évidement 7, il est procédé à la fixation des portions 4, 8 entre elles par introduction d'un moyen de fixation 12, 12a dans les passages 11 des première et seconde portions 4, 8, avec avantageusement l'évidement 7 et le passage 11 disposés à une des extrémités respectives opposées de la portion fixe 4.

Le cas échéant, ces étapes sont répétées à l'autre extrémité du pare-chocs 1 pour sa fixation avec un deuxième élément 2 de carrosserie qui peut être similaire et symétrique à l'élément 2 de carrosserie déjà solidarisé avec le pare-chocs 1, ceci par exemple de l'autre côté du pare-chocs 1 en encadrant entre deux éléments 2 le pare-chocs entre eux.

Les avantages procurés par la présente invention sont divers. Un avantage de qualité est ainsi obtenu en garantissant la prestation de placage du pare-chocs sur l'élément de carrosserie aussi bien lors du montage que dans la durée en garantissant suffisamment de résistance dans la liaison par le moyen de fixation. La qualité perçue est garantie.

Un autre avantage concerne l'ergonomie au poste de montage du fait de l'accessibilité des moyens de fixation pour le monteur, ce qui permet un montage sans effort du moyen de fixation, avantageusement par visseuse.

Un tel dispositif procure aussi un avantage esthétique en rendant invisible le dispositif de fixation selon l'invention.

Enfin et surtout, le dispositif et le procédé de fixation selon la présente invention permettent une implantation de la fixation du pare-chocs sur un élément de carrosserie dans des espaces réduits fortement encombrés.

L'invention n'est nullement limitée aux modes de réalisation décrits et illustrés qui n'ont été donnés qu'à titre d'exemples.

## Revendications

1. Dispositif (3) de fixation l'une avec l'autre de deux pièces (1, 2) étant un pare-chocs (1) et un élément (2) de la carrosserie d'un véhicule automobile, le dispositif (3) étant destiné à loger et retenir en son intérieur une partie (1a) d'au moins une première (1) des pièces (1, 2), **caractérisé en ce qu'**il comprend une portion fixe (4) et une portion amovible (8) superposées dans une position de fixation du dispositif avec un espacement (9) entre les deux portions (4, 8), l'espacement (9) comportant une zone de logement et de retenue des parties (1a, 2a) des première et seconde pièces (1, 2) superposées l'une à l'autre, un passage (11) porté par une extrémité de chacune des portions fixe (4) et amovible (8) étant déporté sur le dispositif (3) par rapport à la zone de logement, ce passage (11) recevant un moyen de fixation (12, 12a) des portions (4, 8) entre elles.

2. Dispositif (3) selon la revendication 1, dans lequel la portion fixe (4) présente une première extrémité portant un évidement (7) pour la réception d'un bec (10) porté par une première extrémité de la portion amovible (8) et les portions fixe (4) et amovible (8) présentent des secondes extrémités en vis-à-vis en position de fixation du dispositif (3), les secondes extrémités étant opposées aux premières extrémités sur leur portion (4, 8) respective, les secondes extrémités portant chacune le passage (11) pour le moyen de fixation (12, 12a).

3. Dispositif (3) selon l'une quelconque des revendications 1 ou 2, dans lequel le bec (10) comprend un tronçon d'extrémité (10a) distale par rapport à la portion amovible (8) le portant et un tronçon intercalaire (10b) entre le tronçon d'extrémité (10a) et la portion amovible (8), le tronçon intercalaire (10b) délimitant une largeur de l'espacement (9) entre les portions fixe (4) et amovible (8).

4. Dispositif (3) selon la revendication 3, dans lequel le tronçon d'extrémité (10a) distale est formé par un recourbement de l'extrémité distale de 10 à 90°.

5. Dispositif (3) selon la revendication 3 ou 4, dans lequel l'évidement (7) présente des dimensions permettant un jeu pour l'introduction du tronçon d'extrémité (10a) distale en son intérieur.

6. Dispositif (3) selon l'une quelconque des revendications précédentes, dans lequel la portion fixe (4) est intégrée dans la seconde (2) des pièces (1, 2).

7. Dispositif (3) selon l'une quelconque des revendications précédentes, dans lequel le moyen de fixation (12, 12a) traversant par le passage (11) les portions fixe (4) et amovible (8) est du type vis (12) et écrou (12a).

8. Ensemble d'un pare-chocs (1) et d'au moins un élément (2) de la carrosserie d'un véhicule automobile lui étant adjacent, **caractérisé en ce qu'**il comporte un dispositif (3) de fixation du pare-chocs (1) sur ledit au moins un élément (2) selon l'une quelconque des revendications précédentes, le pare-chocs (1) comportant une peau (1a) de pare-chocs formant la partie de la première pièce logée et retenue dans le dispositif (3) et un organe de renfort (2a) dudit au moins un élément (2) de la carrosserie formant une partie de la seconde pièce logée et retenue dans le dispositif (3) avec la portion fixe (4) intégrée dans ou disposée au dos, opposé à la peau de pare-chocs (1), de l'organe de renfort (2a) dudit au moins un élément (2) de la carrosserie, les parties ainsi superposées de la peau (1a) de pare-chocs (1) et de l'organe de renfort (2a) formant entre elles une surface d'accostage (13), le passage (11) respectif des portions (4, 8) fixe et amovible étant localisé à l'extérieur de la surface d'accostage (13).

9. Ensemble selon la revendication 8, dans lequel l'ensemble comporte deux éléments de carrosserie sous forme d'une aile (2) encadrant le pare-chocs (1), l'ensemble comportant un dispositif (3) de fixation du pare-chocs (1) à chacune des ailes (2).

10. Procédé de fixation d'un pare-chocs (1) sur au moins un élément (2) de la carrosserie dans un ensemble selon l'une quelconque des revendications 8 ou 9, lequel comporte les étapes suivantes :
- quand la portion fixe (4) n'est pas intégrée audit au moins un élément (2), positionnement de la portion fixe (4) sur la face dudit au moins un élément (2) opposée à celle portant la partie (2a) dudit au moins un élément (2) destinée à être superposée par une partie (1a) du pare-chocs (1), la portion amovible (8) étant retirée du dispositif (3),
- superposition d'une partie (1a) du pare-chocs (1) sur la partie (2a) dudit au moins un élément (2) de la carrosserie avec la portion fixe (4) intégrée dans la partie (2a) ou disposée sur la face opposée à la peau (1a) de pare-chocs de la partie (2a),
- présentation du bec (10) de la portion amovible (8) pour son introduction dans l'évidement (7) porté par la portion fixe (4),
- quand le bec (10) est retenu dans l'évidement (7), fixation des portions (4, 8) entre elles par introduction d'un moyen de fixation (12, 12a) dans les passages (11) des première et seconde portions (4, 8).

## Patentansprüche

1. Vorrichtung (3) zur Befestigung zweier Teile (1, 2), die eine Stoßstange (1) und ein Element (2) der Karosserie eines Kraftfahrzeugs sind, eines an dem anderen, wobei die Vorrichtung (3) dazu bestimmt ist, in ihrem Inneren einen Teil (1a) mindestens eines ersten (1) der Teile (1, 2) aufzunehmen und zurückzuhalten, **dadurch gekennzeichnet, dass** sie einen stationären Abschnitt (4) und einen abnehmbaren Abschnitt (8) umfasst, die in einer Befestigungsposition der Vorrichtung mit einer Beabstandung (9) zwischen den zwei Abschnitten (4, 8) überlagert sind, wobei der Abstand (9) eine Zone zum Aufnehmen und Zurückhalten der Teile (1a, 2a) des ersten und des zweiten Teils (1, 2), die einander überlagert sind, umfasst, wobei eine Passage (11), die von einem Ende jedes des stationären (4) und des abnehmbaren Abschnitts (8) auf der Vorrichtung (3) bezüglich der Aufnahmezone verlagert ist, wobei diese Passage (11) ein Mittel (12, 12a) zur Befestigung der Abschnitte (4, 8) aneinander aufnimmt.

2. Vorrichtung (3) nach Anspruch 1, wobei der stationäre Abschnitt (4) ein erstes Ende aufweist, das eine Aussparung (7) für die Aufnahme eines Schnabels (10) trägt, der von einem ersten Ende des abnehmbaren Abschnitts (8) getragen wird, und der stationäre (4) und der abnehmbare (8) Abschnitt zweite Enden in Gegenüberlage in Befestigungsposition der Vorrichtung (3) aufweisen, wobei die zweiten Enden den ersten Enden auf ihrem jeweiligen Abschnitt (4, 8) entgegengesetzt sind, wobei die zweiten Enden jeweils die Passage (11) für das Befestigungsmittel (12, 12a) tragen.

3. Vorrichtung (3) nach einem der Ansprüche 1 oder 2, wobei der Schnabel (10) einen distalen Endabschnitt (10a) umfasst, der bezüglich des abnehmbaren Abschnitts (8), der ihn trägt, und einen Zwischenabschnitt (10b) zwischen dem Endabschnitt (10a) und dem abnehmbaren Abschnitt (8), wobei der Zwischenabschnitt (10b) eine Breite der Beabstandung (9) zwischen dem stationären (4) und dem abnehmbaren (8) Abschnitt abgrenzt.

4. Vorrichtung (3) nach Anspruch 3, wobei der distale Endabschnitt (10a) durch eine Rückwärtskrümmung des distalen Endes von 10 bis 90° gebildet ist.

5. Vorrichtung (3) nach Anspruch 3 oder 4, wobei die Aussparung (7) Maße aufweist, die ein Spiel für das Einführen des distalen Endabschnitts (10a) in ihr Inneres erlauben.

6. Vorrichtung (3) nach einem der vorstehenden Ansprüche, wobei der stationäre Abschnitt (4) in das zweite (2) der Teile (1, 2) integriert ist.

7. Vorrichtung (3) nach einem der vorstehenden Ansprüche, wobei das Befestigungsmittel (12, 12a), das durch die Passage (11) den stationären (4) und den abnehmbaren (8) Abschnitt durchquert, vom Typ Schraube (12) und Mutter (12a) ist.

8. Baugruppe aus einer Stoßstange (1) und mindestens einem Element (2) der Karosserie eines Kraftfahrzeugs, die daran angrenzt, **dadurch gekennzeichnet, dass** sie eine Vorrichtung (3) zur Befestigung der Stoßstange (1) auf dem mindestens einen Element (2) nach einem der vorstehenden Ansprüche umfasst, wobei die Stoßstange (1) eine Stoßstangenhaut (1a) umfasst, die den Teil des ersten Teils bildet, der in der Vorrichtung (3) aufgenommen und zurückgehalten ist, und ein Verstärkungselement (2a) des mindestens einen Elements (2) der Karosserie, das einen zweiten Teil des zweiten Teils bildet, der in der Vorrichtung (3) aufgenommen und zurückgehalten ist, mit dem stationären Abschnitt (4), der darin oder an der Rückseite, zu der Stoßstangenhaut (1) entgegengesetzt des Verstärkungselements (2a) des mindestens einen Elements (2) der Karosserie integriert ist, wobei die derart überlagerten Teile der Haut (1a) einer Stoßstange (1) und des Verstärkungselements (2a) aneinander eine Andockoberfläche (13) bilden, wobei die jeweilige Passage (11) des stationären und des abnehmbaren Abschnitts (4, 8) außerhalb der Andockoberfläche (13) liegt.

9. Baugruppe nach Anspruch 8, wobei die Baugruppe zwei Karosserieelemente in Form eines Flügels (2) umfasst, die die Stoßstange (1) einrahmen, wobei die Baugruppe eine Vorrichtung (3) zur Befestigung der Stoßstange (1) an jedem der Flügel (2) umfasst.

10. Verfahren zur Befestigung einer Stoßstange (1) auf mindestens einem Element (2) der Karosserie in einer Baugruppe nach einem der Ansprüche 8 oder 9, das die folgenden Schritte umfasst:
- wenn der stationäre Abschnitt (4) nicht in das mindestens eine Element (2) integriert ist, Positionieren des stationären Abschnitts (4) auf der Fläche des mindestens einen Elements (2), die der entgegengesetzt ist, die den Teil (2a) des mindestens einen Elements (2) trägt, der dazu bestimmt ist, durch einen Teil (1a) der Stoßstange (1) überlagert zu sein, wobei der abnehmbare Abschnitt (8) von der Vorrichtung (3) abgenommen ist,
- Überlagerung eines Teils (1a) der Stoßstange (1) auf dem Teil (2a) des mindestens einen Elements (2) der Karosserie mit dem stationären Abschnitt (4), der in dem Teil (2a) integriert oder auf der Fläche angeordnet ist, die der Stoßstangenhaut (1a) des Teils (2a) entgegengesetzt ist,
- Präsentation des Schnabels (10) des abnehmbaren Abschnitts (8) für sein Einführen in die Aussparung (7), die von dem stationären Abschnitt (4) getragen wird,
- wenn der Schnabel (10) in der Aussparung (7) zurückgehalten ist, Befestigen der Abschnitte (4, 8) aneinander durch Einführen eines Befestigungsmittels (12, 12a) in die Passagen (11) des ersten und zweiten Abschnitts (4, 8).

## Claims

1. A device (3) for fixing two parts (1, 2) to one another, said parts being a bumper (1) and a body element (2) of a motor vehicle, the device (3) being intended for housing and retaining in its interior a portion (1a) of at least a first (1) of the parts (1, 2), **characterized in that** it includes a stationary portion (4) and a removable portion (8) which are superposed in a fixing position of the device with a spacing (9) between the two portions (4, 8), the spacing (9) comprising zone for housing and retaining the portions (1a, 2a) of the first and second parts (1, 2) superposed with respect to one another, a passage (11), supported by an end of each of the stationary (4) and removable (8) portions, being offset on the device (3) relative to the housing zone, this passage (11) receiving a fixing means (12, 12a) of the portions (4, 8) with one another.

2. The device (3) according to Claim 1, in which the stationary portion (4) has a first end carrying a recess (7) for receiving a nose (10) carried by a first end of the removable portion (8), and the stationary (4) and removable (8) portions have second ends opposite in fixing position of the device (3), the second ends being opposed to the first ends on their respective portion (4, 8), the second ends each carrying the passage (11) for the fixing means (12, 12a) .

3. The device (3) according to any one of Claims 1 or 2, in which the nose (10) includes an end section (10a) which is distal with respect to the removable portion (8) carrying it and an intercalated section (10b) between the end section (10a) and the removable portion (8), the intercalated section (10b) delimiting a width of the spacing (9) between the stationary (4) and removable (8) portions.

4. The device (3) according to Claim 3, in which the distal end section (10a) is formed by a bending of the distal end of 10 to 90°.

5. The device (3) according to Claim 3 or 4, in which the recess (7) has dimensions permitting a play for the introduction of the distal end section (10a) in its interior.

6. The device (3) according to any one of the preceding claims, in which the stationary portion (4) is integrated in the second (2) of the parts (1, 2).

7. The device (3) according to any one of the preceding claims, in which the fixing means (12, 12a) passing through by the passage (11) the stationary (4) and removable portions (8), is of the screw (12) and nut (12a) type.

8. An assembly of a bumper (1) and of at least one body element (2) of a motor vehicle being adjacent thereto, **characterized in that** it comprises a device (3) for fixing the bumper (1) on said at least one element (2) according to any one of the preceding claims, the bumper (1) comprising a bumper skin (1a) forming the portion of the first part housed and retained in the device (3) and a reinforcement member (2a) of said at least one body element (2) forming a portion of the second part housed and retained in the device (3) with the stationary portion (4) integrated in or disposed at the back, opposed to the bumper skin (1), of the reinforcement member (2a) of said at least one body element (2), the thus superposed parts of the skin (1a) of the bumper (1) and of the reinforcement member (2a) forming between them a mating surface (13), the respective passage (11) of the stationary and removable portions (4, 8) being located at the exterior of the mating surface (13).

9. The assembly according to Claim 8, in which the assembly comprises two body elements in the form of a wing (2) framing the bumper (1), the assembly comprising a device (3) for fixing the bumper (1) to each of the wings (2).

10. A method for fixing a bumper (1) on at least one body element (2) in an assembly according to any one of Claims 8 or 9, which comprises the following steps:
- when the stationary portion (4) is not integrated to at least one element (2), positioning of the stationary portion (4) on the face of said at least one element (2) opposite to that carrying the portion (2a) of said at least one element (2) intended to be superposed by a portion (1a) of the bumper (1), the removable portion (8) being withdrawn from the device (3),
- superposition of a portion (1a) of the bumper (1) on the portion (2a) of said at least one element (2) of the body with the stationary portion (4) integrated in the portion (2a) or disposed on the opposite face to the bumper skin (1a) of the portion (2a),
- presentation of the nose (10) of the removable portion (8) for its introduction in the spacing (7) carried by the stationary portion (4),
- when the nose (10) is retained in the spacing (7), fixing of the portions (4, 8) with one another by introduction of a fixing means (12, 12a) in the passages (11) of the first and second portions (4, 8) .
